# EUROPEAN PATENT APPLICATION

(11) **EP 4 654 174 A1**
(43) Date of publication of application: **26.11.2025**
(21) Application number: 25171289.9
(22) Date of filing: 17.04.2025
(51) Int. Cl.: G09B 5/06

(54) **REMOTE INTERACTION METHOD AND REMOTE INTERACTION SYSTEM**

(30) Priority: 23.05.2024 TW 113119018
(71) Applicant: Optoma Coporation, New Taipei City 231633 (TW)
(72) Inventor: LI, Yu-Chin, 231633 NEW TAIPEI CITY (TW); SHA, Shao-Yun, 231633 NEW TAIPEI CITY (TW); HUANG, Ching-Yun, 231633 NEW TAIPEI CITY (TW)
(74) Representative: Ter Meer Steinmeister & Partner

(57) **Abstract**

A remote interaction method and a remote interaction system are provided. The remote interaction method includes: displaying a first interactive interface through a first electronic apparatus; inputting management account data through the first electronic apparatus to log in to the first interactive interface; setting content information according to a user operation through the first interactive interface; transmitting the content information through the first electronic apparatus; receiving the content information through a second electronic apparatus; displaying a second interactive interface through the second electronic apparatus; and displaying the content information through the second interactive interface.

## Description

This application claims priority of Taiwan application serial no. 113119018, filed on May 23, 2024.

### BACKGROUND

### Technical Field

The disclosure relates to a remote information transmission mechanism, and particularly relates to a remote interaction method and a remote interaction system.

### Related Art

Currently, in the educational field, when a teacher wants to publish class-related information, the teacher needs to go to the classroom to write or post such information on the blackboard, whiteboard or bulletin board, or publish such information through the school website. Besides, when a student wants to contact the teacher, the student needs to come visit the teacher in person. As a result, the transmission of information between teachers and students is slow and not in real-time.

In addition, current remote teaching mainly focuses on providing real-time interaction, and there is a lack of a remote and real-time information transmission interaction channel during non-class hours.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

Other objectives, features and advantages of the present disclosure will be further understood from the further technological features disclosed by the embodiments of the present disclosure wherein there are shown and described preferred embodiments of this invention, simply by way of illustration of modes best suited to carry out the invention.

The object is solved by the features of the independent claims. Preferred embodiments are given in the dependent claims.

To achieve one or part or all of the above objectives or other objectives, a remote interaction method according to an embodiment of the disclosure includes: displaying a first interactive interface through a first electronic apparatus; inputting management account data through the first electronic apparatus to log in to the first interactive interface; setting content information according to a user operation through the first interactive interface; transmitting the content information through the first electronic apparatus; receiving the content information through a second electronic apparatus; displaying a second interactive interface through the second electronic apparatus; and displaying the content information through the second interactive interface.

In one or more embodiments, the remote interaction method may further include: communicatively connecting a cloud server with the first electronic apparatus through the first interactive interface, and communicatively connecting the cloud server with the second electronic apparatus through the second interactive interface; transmitting the content information to the cloud server through the first interactive interface and storing the content information in the cloud server in response to the management account data logging in to the first interactive interface of the first electronic apparatus; and receiving the content information stored in the cloud server through the second interactive interface after displaying the second interactive interface through the second electronic apparatus.

In one or more embodiments, the remote interaction method may further include: executing a binding operation through the cloud server to bind the second electronic apparatus to the management account data, in which the binding operation includes: generating an identification code by the cloud server, and transmitting the identification code to the second electronic apparatus to display the identification code on the second interactive interface in response to the cloud server receiving a binding command provided by the second electronic apparatus; transmitting an input code to the cloud server through the first interactive interface of the first electronic apparatus in response to the management account data logging in to the first interactive interface of the first electronic apparatus; and adding apparatus information corresponding to the second electronic apparatus in the first interactive interface, and enabling the first electronic apparatus and the second electronic apparatus to interact through the first interactive interface and the second interactive interface in response to the cloud server determining that the input code is the identification code.

In one or more embodiments, after binding the second electronic apparatus to the management account data, the remote interaction method may further include: selecting another management account data through the first interactive interface of the first electronic apparatus in response to the management account data logging in to the first interactive interface of the first electronic apparatus; and adding the apparatus information corresponding to the second electronic apparatus to a third interactive interface corresponding to the another management account data through the cloud server, thereby binding the second electronic apparatus to the another management account data.

In one or more embodiments, the remote interaction method may further include: setting the content information and a publication time according to the user operation through the first interactive interface, and transmitting the content information and the publication time to the cloud server in response to the management account data logging in to the first interactive interface of the first electronic apparatus; and transmitting the content information to the second electronic apparatus through the cloud server, and transmitting a display command to the second electronic apparatus at the publication time to enable the second electronic apparatus to display the content information through the second interactive interface.

In one or more embodiments, the remote interaction method may further include: in response to the cloud server receiving a plurality of pieces of content information, transmitting a display command to the second electronic apparatus at a publication time of each piece of the content information through the cloud server, and enabling the second electronic apparatus to display one corresponding piece of the content information through the second interactive interface.

In one or more embodiments, the cloud server may provide an external display interface for use by third-party account data.

In one or more embodiments, the remote interaction method may further include: selecting the third-party account data and designated content through the first interactive interface, and transmitting the designated content to the external display interface corresponding to the third-party account data in response to the management account data logging in to the first interactive interface of the first electronic apparatus.

In one or more embodiments, the remote interaction method may further include: capturing a multimedia signal through a multimedia capturing device of the first electronic apparatus, and transmitting the multimedia signal through the first interactive interface in response to the management account data logging in to the first interactive interface of the first electronic apparatus; and playing the multimedia signal transmitted from the first interactive interface through the second interactive interface of the second electronic apparatus.

In one or more embodiments, the remote interaction method may further include: playing a multimedia signal captured by a multimedia capturing device of the second electronic apparatus through the first interactive interface in response to the management account data logging in to the first interactive interface of the first electronic apparatus.

In one or more embodiments, the remote interaction method may further include: displaying the content information through the second interactive interface, and in response to the second interactive interface receiving another content information, overlaying the another content information on the content information in the second interactive interface.

In one or more embodiments, the second interactive interface may provide an information page real-time interaction function and a remote interaction function.

In one or more embodiments, and after displaying content information of an information page through the second interactive interface, the remote interaction method may further include at least one of: executing the information page real-time interaction function through the second electronic apparatus to control or adjust the content information of the information page in the second interactive interface; and executing the remote interaction function through the second electronic apparatus to trigger a multimedia capturing device of the second electronic apparatus to capture a second multimedia signal, and allowing reception of a first multimedia signal transmitted from the first interactive interface of the first electronic apparatus.

In one or more embodiments, the first interactive interface may provide an information page creation function, a grade management function, a publication management function, and a remote interaction function.

In one or more embodiments, the remote interaction method may further comprise a step of setting the content information according to the user operation through the first interactive interface of the first electronic apparatus.

In one or more embodiments the step may include at least one of: executing the information page creation function to select a preset template from a template library or add a blank template, and setting the content information in the preset template or the blank template, in which the content information includes at least one of an announcement, a class schedule, a task to do, and video and voice; executing the grade management function to perform a grade editing; executing the publication management function to set to immediately publish the content information, or set a publication time of the content information; and executing the remote interaction function to trigger a multimedia capturing device of the first electronic apparatus to capture a first multimedia signal, and allowing reception of a second multimedia signal transmitted from the second interactive interface.

A remote interaction system according to an embodiment of the disclosure includes: a first electronic apparatus and a second electronic apparatus. The first electronic apparatus includes: at least one processor, a display, an input device, and a communication device, in which the at least one processor is electrically connected to the display and the communication device respectively. The display is configured to display a first interactive interface, the input device is configured to input management account data to log in to the first interactive interface, the at least one processor is configured to set content information according to a user operation through the first interactive interface, and the communication device is configured to transmit the content information. The second electronic apparatus includes: at least one processor, a display, and a communication device, in which the at least one processor is electrically connected to the display and the communication device respectively. The communication device is configured to receive the content information, the display is configured to display a second interactive interface, and the at least one processor is configured to provide the content information to the display, to display the content information through the second interactive interface.

Based on the above, according to the disclosure, the content information of the information page is set through the first electronic apparatus, and then the content information is transmitted to the second electronic apparatus to be displayed, which allows important messages to be published on the second electronic apparatus in real-time, and avoids a delay in message transmission.

### BRIEF DESCRIPTION OF THE DRAWINGS

FIG. 1 is a schematic diagram of the remote interaction system of the first embodiment.
FIG. 2 is a flowchart of the remote interaction method of the first embodiment.
FIG. 3 is a schematic diagram of the remote interaction system of the second embodiment
FIG. 4 is a schematic diagram of transmitting the content information of the second embodiment.
FIG. 5 is a schematic diagram of the screen when binding the first electronic apparatus and the second electronic apparatus according to an embodiment.
FIG. 6A to FIG. 6D are schematic diagrams of the editing interface displayed by the first electronic apparatus according to an embodiment.
FIG. 7A to FIG. 7C are schematic diagrams of the publication setting window of an embodiment.
FIG. 8 is a schematic diagram of the first electronic apparatus displaying the user interface according to an embodiment.
FIG. 9 is a schematic diagram of the first electronic apparatus displaying the schedule resetting interface according to an embodiment.
FIG. 10 is a schematic diagram of the second electronic apparatus displaying the user interface according to an embodiment.
FIG. 11 is a schematic diagram of the scoring editing panel of an embodiment of the disclosure.
FIG. 12 is a schematic diagram of the third-party electronic apparatus displaying the designated content according to an embodiment.
FIG. 13 is a schematic diagram of the remote interaction system of the third embodiment.
FIG. 14 is an architecture diagram of the remote interaction system of the third embodiment.
FIG.15 schematic diagram of the functions provided by the teacher interface of the third embodiment.
FIG.16 schematic diagram of the functions provided by the display interface of the third embodiment.

### DESCRIPTION OF THE EMBODIMENTS

The aforementioned and other technical content, features, and effects of the disclosure will be clearly presented in the following detailed description of exemplary embodiments with reference to the accompanying drawings. The directional terms mentioned in the following embodiments, such as up, down, left, right, front, and back, are only referenced to the directions in the accompanying drawings. Therefore, the directional terms used herein are for explanatory purposes and not intended to limit the disclosure. It is to be understood that other embodiment may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

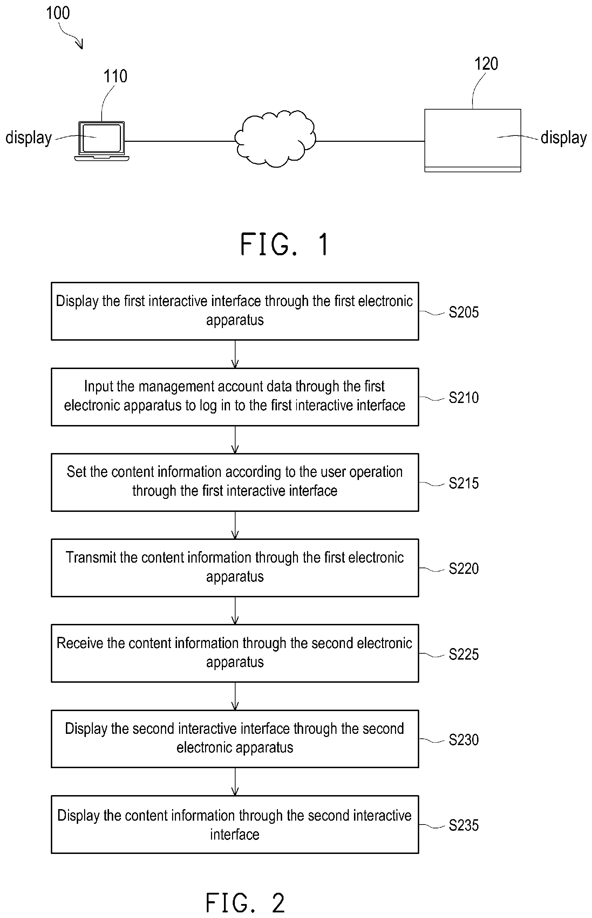

FIG. 1 is a schematic diagram of the remote interaction system according to the first embodiment of the disclosure. A remote interaction system 100 includes a first electronic apparatus 110 and a second electronic apparatus 120. The first electronic apparatus 110 and the second electronic apparatus 120 are connected via network communication. The first electronic apparatus 110 may be, for example, a smartphone, a tablet computer, a laptop computer, a personal computer, etc., used by a user (for example, a teacher). The second electronic apparatus 120 is an interactive display apparatus, such as an interactive flat panel display (IFP Display), a touch display, or a projector with a touch device. The interactive display apparatus may be set up in places such as classroom and conference room.

In an embodiment, the first electronic apparatus 110 includes at least one processor, a storage, a display, an input device, and a communication device. The at least one processor is electrically connected to the storage, the display, the input device, and the communication device, respectively. Similarly, the second electronic apparatus 120 includes at least one processor, a storage, a display, an input device, and a communication device. The at least one processor is electrically connected to the storage, the display, the input device, and the communication device, respectively.

The processor may be, for example, a central processing unit (CPU), a physics processing unit (PPU), a programmable microprocessor, an embedded control chip, a digital signal processor (DSP), an application specific integrated circuit (ASIC), or other similar devices.

The storage may be implemented using any type of random access memory (RAM), read-only memory (ROM), flash memory, hard disk, other similar devices, or a combination of these devices. The storage stores at least one program, including, for example, an information application program. After being installed, the program is executed by the at least one processor in the same electronic apparatus to implement corresponding functions. The input device may be, for example, a mouse, a keyboard, or a touch device.

The communication device may be a chip or a circuit that adopts local area network (LAN) technology, wireless LAN (WLAN) technology, or mobile communication technology. The local area network may be, for example, Ethernet. The wireless LAN may be, for example, Wi-Fi. The mobile communication technology may include Global System for Mobile Communications (GSM), third-Generation (3G) mobile communication technology, fourth-Generation (4G) mobile communication technology, fifth-Generation (5G) mobile communication technology, or any other latest mobile communication technology.

The display may be, for example, a liquid crystal display (LCD), a plasma display, a light emitting diode (LED) display, etc.

FIG. 2 is a flowchart of the remote interaction method according to the first embodiment of the disclosure. Referring to FIG. 1 and FIG. 2, in step S205, a first interactive interface is displayed through the display of the first electronic apparatus 110. In step S210, management account data (for example, account and password of the user) is input through the input device of the first electronic apparatus 110 to log in to the first interactive interface. Then, in step S215, at least one processor sets content information according to a user operation through the first interactive interface. In step S220, the content information is transmitted through the communication device of the first electronic apparatus 110.

In step S225, the content information is received through the communication device of the second electronic apparatus 120. In step S230, a second interactive interface is displayed through the display of the second electronic apparatus 120.

In step S235, after at least one processor of the second electronic apparatus 120 receives the content information provided by the communication device, the at least one processor provides the content information to the display, and the display of the second electronic apparatus 120 displays the content information through the second interactive interface.

In the case where the remote interaction system 100 is applied to an educational field, the teacher uses the first electronic apparatus 110, and the second electronic apparatus 120 may be, for example, an interactive display apparatus set up in the classroom. The teacher may set content information through the first electronic apparatus 110. The set content information is transmitted to the designated second electronic apparatus 120 via a network, thereby displaying the set content information on the display of the second electronic apparatus 120.

Specifically, the teacher may upload the set content information to a cloud server through the first electronic apparatus 110. The cloud server may then publish the content information to the designated second electronic apparatus 120 in real-time, or schedule the publication (specify the publication time) to the designated second electronic apparatus 120. In an embodiment, the teacher may upload the set content information to the cloud server through the first interactive interface of the first electronic apparatus 110. Further, the teacher may designate the one second electronic apparatus 120 or multiple second electronic apparatuses 120 for publication through the first interactive interface of the first electronic apparatus 110. Nevertheless, the present disclosure is not limited thereto.

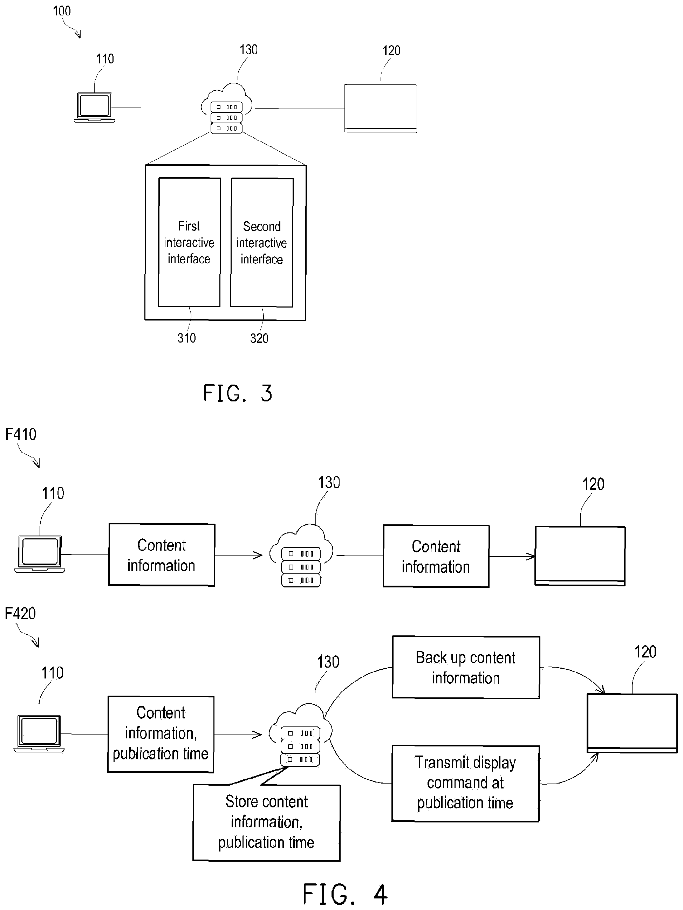

The remote interaction system 100 may further include a cloud server 130. FIG. 3 is a schematic diagram of the remote interaction system according to the second embodiment of the disclosure. The remote interaction system 100 includes the first electronic apparatus 110, the second electronic apparatus 120, and the cloud server 130. The first electronic apparatus 110, the second electronic apparatus 120, and the cloud server 130 are communicatively connected via a network through a wired or wireless transmission protocol. The cloud server 130 includes at least one processor, a storage, and a communication device, with the processor electrically connected to the storage and the communication device respectively. The cloud server 130 is communicatively connected to the first electronic apparatus 110 and the second electronic apparatus 120. The cloud server 130 is configured to generate a first interactive interface 310 and a second interactive interface 320, and provide the first interactive interface 310 and the second interactive interface 320 to be displayed on the respective displays of the first electronic apparatus 110 and the second electronic apparatus 120. Through the first interactive interface 310, the first electronic apparatus 110 is communicatively connected to the cloud server 130, and through the second interactive interface 320, the first electronic apparatus 110 is communicatively connected to the cloud server 130. Here, the first interactive interface 310 is configured to be used by the first electronic apparatus 110 that serves as a management apparatus, and the second interactive interface 320 is configured to be used by the second electronic apparatus 120 that serves as a display apparatus. In another embodiment, the remote interaction system 100 may include multiple second electronic apparatuses 120, and the cloud server 130 may provide multiple second interactive interfaces 320 corresponding to the number of second electronic apparatuses 120, so that one second electronic apparatus 120 corresponds to one second interactive interface. In an embodiment, multiple second electronic apparatuses 120 correspond to different classrooms or meeting rooms, and therefore, the content of multiple second interactive interfaces 320 displayed by multiple second electronic apparatuses 120 is different from each other.

Specifically, a user operates the first electronic apparatus 110, and in response to the management account data logging in to the first interactive interface 310 of the first electronic apparatus 110, the first interactive interface 310 is displayed on the display of the first electronic apparatus 110, through which the content information is set according to a user operation, and the content information is transmitted to and stored in the cloud server 130. Subsequently, when the second electronic apparatus 120 is communicatively connected to the cloud server 130, and the second interactive interface 320 is displayed on the display of the second electronic apparatus 120, the content information stored in the cloud server 130 is received through the second electronic apparatus 120 to be displayed in the second interactive interface 320.

There are two states for the first electronic apparatus 110 to upload the content information to the cloud server 130, and for the cloud server 130 to transmit the content information to the designated second electronic apparatus 120. These states are described in detail below using states F410 and F420 shown in FIG. 4.

FIG. 4 is a schematic diagram of transmitting the content information according to the second embodiment of the disclosure. In state F410, the first electronic apparatus 110 transmits content information to the cloud server 130, after which the cloud server 130 immediately transmits the content information to the second electronic apparatus 120, to display the content information in real-time on the second electronic apparatus 120. In practical applications, the user (teacher) may upload content information to the cloud server 130 through a personal apparatus (first electronic apparatus 110). After the cloud server 130 stores the content information, the cloud server 130 immediately publishes the content information to the designated second electronic apparatus 120.

In state F420, in the first electronic apparatus 110, in response to the management account data logging in to the first interactive interface 310, the content information and the publication time are set according to a user operation through the first interactive interface 310, and the set content information and the set publication time are transmitted to the cloud server 130 for the cloud server 130 to store the set content information and the set publication time. Next, the cloud server 130 transmits the content information to the second electronic apparatus 120 to back up the content information in advance to the second electronic apparatus 120. Then, when the publication time comes, the cloud server 130 transmits a display command to the second electronic apparatus 120, enabling the second electronic apparatus 120 to display the content information backed up in the second electronic apparatus 120 through the second interactive interface 320.

In practical applications, the file size of the content information may be too large, which may affect the upload/download speed. Therefore, after the user (teacher) edits and uploads the content information to the cloud server 130, the cloud server 130 may back up the content information to the second electronic apparatus 120 before the publication time comes, to save subsequent download time. However, the disclosure is not limited thereto. In other embodiments, if the file size of the content information is not large, the cloud server 130 may provide the content information to the second electronic apparatus 120 when the publication time comes.

The first electronic apparatus 110 may set multiple pieces of content information to be published to the second electronic apparatus 120 at different publication times. The cloud server 130 receives the content information and the corresponding publication times transmitted by the first electronic apparatus 110. In response to the cloud server 130 receiving multiple pieces of content information, the cloud server 130 transmits a display command to the second electronic apparatus 120 at the publication time of each content information, enabling the second electronic apparatus 120 to display the corresponding one piece of content information through the second interactive interface 320. The cloud server 130 first transmits the content information to the second electronic apparatus 120 for backup, and transmits the display command to the second electronic apparatus 120 at the publication time, enabling the second electronic apparatus 120 to display the content information through the second interactive interface 320.

For example, it is assumed that the cloud server 130 receives three pieces of content information, including: content information 01 and publication time AM 8:00; content information 02 and publication time AM 9:00; and content information 03 and publication time AM 10:00. The cloud server 130 may back up the three pieces of content information to the second electronic apparatus 120 before the publication times. The cloud server 130 transmits display commands to the second electronic apparatus 120 at the publication times AM 8:00, AM 9:00, and AM 10:00 respectively, enabling the second electronic apparatus 120 to display the content information 01 at AM 8:00; display the content information 02 at AM 9:00; and display the content information 03 at AM 10:00.

In another embodiment, when multiple users (using different management account data) publish different content information to the same electronic apparatus (for example, the second electronic apparatus 120), the content information uploaded at the latest time (most recent) overwrites the previous content information. Alternatively, when the same user publishes multiple pieces of content information to the same electronic apparatus (for example, the second electronic apparatus 120), the most recently uploaded content information overwrites the previous content information.

For example, in a case where the second electronic apparatus 120 displays content information through the second interactive interface 320, in response to the second interactive interface 320 receiving another content information, the currently displayed content information is overwritten with the another content information in the second interactive interface 320.

For example, in a case where user A (English teacher) adds content of English test time to the first content information and sets the first content information to be published at AM 10:00, and user B (Physical Education teacher) adds content of basketball test time to the first content information and sets the second content information to be published at AM 11:00, the second electronic apparatus 120 displays the second content information set by user B at AM 11:00. At this time, the second content information includes the content of English test time and the content of basketball test time. The first content information is different from the second content information. Alternatively, in a case where user A (English teacher) sets the first content information (English test time at 2 PM) to be published at AM 10:00, and user A sets the second content information (English test time at 3 PM) to be published at AM 11:00, the second electronic apparatus 120 displays the second content information at AM 11:00.

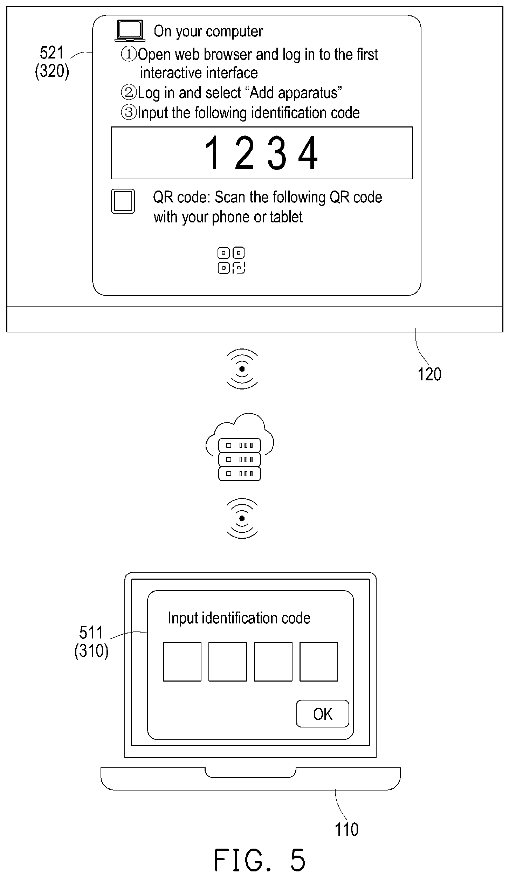

In a case where the first electronic apparatus 110 logs in with the management account data, before specifying to transmit content information to the second electronic apparatus 120, a binding operation is further performed through the cloud server 130 to bind the second electronic apparatus 120 to the management account data of the user, as shown in FIG. 5.

In an embodiment, the storage of the first electronic apparatus 110 and the storage of the second electronic apparatus 120 are respectively installed with corresponding information applications (APP). The at least one processor of the first electronic apparatus 110 and the at least one processor of the second electronic apparatus 120 may respectively execute the corresponding information applications and communicate with the cloud server 130 through the corresponding information applications, thereby displaying the first interactive interface 310 and the second interactive interface 320 provided by the cloud server 130 on the first electronic apparatus 110 and the second electronic apparatus 120 respectively. In another embodiment, the first electronic apparatus 110 and the second electronic apparatus 120 may also directly communicate with the cloud server 130 through web browsers, thereby displaying the first interactive interface 310 provided by the cloud server 130 in the web browser of the first electronic apparatus 110, and displaying the second interactive interface 320 provided by the cloud server 130 in the web browser of the second electronic apparatus 120.

FIG. 5 is a schematic diagram of the screen when binding the first electronic apparatus and the second electronic apparatus according to an embodiment of the disclosure. In this embodiment, assuming that the user (teacher) arrives at the classroom or meeting room where the second electronic apparatus 120 is set up, and launches the information application installed in the second electronic apparatus 120, the second interactive interface 320 is displayed through the information application, and the second interactive interface 320 is configured to display the binding steps. The second electronic apparatus 120 executes the information application to transmit a binding command to the cloud server 130 through the communication device of the second electronic apparatus 120. The steps of the binding operation are as follows.

In response to the cloud server 130 receiving the binding command provided by the second electronic apparatus 120, the cloud server 130 randomly generates an identification code and transmits the identification code to the second electronic apparatus 120 to display the identification code on the second interactive interface 320. Here, the second interactive interface 320 displayed by the second electronic apparatus 120 may further provide a binding message screen 521 displaying the binding steps. In the binding message screen 521, the identification code of the second electronic apparatus 120 is displayed, for example, "1234".

On the other hand, the user (teacher) launches the information application through the first electronic apparatus 110 to communicate with the cloud server 130, and after inputting management account data to log in to the first interactive interface 310, selects the "Add bound apparatus" option in the first interactive interface 310, enabling the first interactive interface 310 of the first electronic apparatus 110 to display a binding input screen 511. The first electronic apparatus 110 receives an input code entered by the user through the input screen 511 and transmits the input code to the cloud server 130. That is, the user sees the binding message screen 521 displayed on the second electronic apparatus 120, learns that the identification code is "1234", and inputs the corresponding input code in the binding input screen 511 of the first electronic apparatus 110.

When the cloud server 130 determines that the input code received by the first electronic apparatus 110 matches the previously generated identification code corresponding to the second electronic apparatus 120, the first interactive interface 310 displays the apparatus information (for example, "Apparatus 01") added corresponding to the second electronic apparatus 120, enabling the first electronic apparatus 110 and the second electronic apparatus 120 to interact through the first interactive interface 310 and the second interactive interface 320.

Furthermore, the user may share the apparatus information of the second electronic apparatus 120 bound to the management account data with the management account data of other users, thereby binding the management account data of other users to the second electronic apparatus 120. Specifically, after the management account data acc_A logs in to the first interactive interface 310 of the first electronic apparatus 110, the user may further select another management account data acc_B in the first interactive interface 310 displayed on the first electronic apparatus 110. The another management account data acc_B may be, for example, one of friend groups. The cloud server 130 then adds the apparatus information corresponding to the second electronic apparatus 120 in the third interactive interface corresponding to the management account data acc_B to bind the second electronic apparatus 120 to the management account data acc_B, which eliminates the need for each user to perform the binding steps.

For example, after the management account data acc_A is successfully bound, the first interactive interface 310 displayed on the first electronic apparatus 110 shows the apparatus information (for example, identification code, IP address, or apparatus name) corresponding to the bound second electronic apparatus 120. The user may operate (for example, by clicking the right button of the mouse) to share the apparatus information of the second electronic apparatus 120 with another management account data acc_B, which means that the cloud server 130 binds the second electronic apparatus 120 to another management account data acc_B.

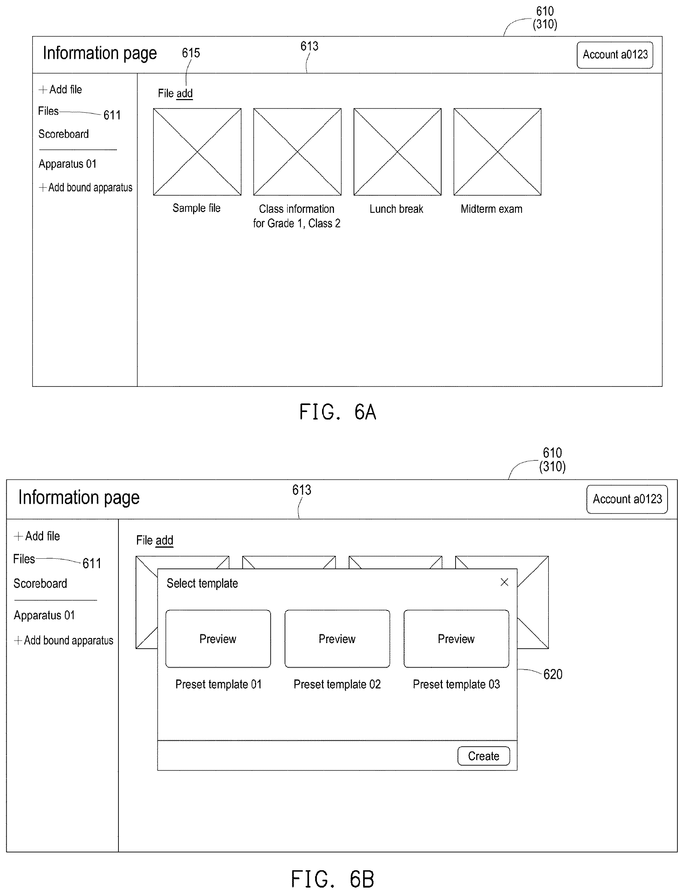

FIG. 6A to FIG. 6D are schematic diagrams of the editing interface displayed by the first electronic apparatus according to an embodiment of the disclosure. This embodiment illustrates an example of adding a template. As shown in FIG. 6A, after the first electronic apparatus 110 is communicatively connected to the cloud server 130 and inputs the management account data (the management account "a0123" may be, for example, the name of the user) to log in to the first interactive interface 310, the first interactive interface 310 displays an editing interface 610. In the editing interface 610, the content information displayed in the right column is determined based on the option selected in the left column of the information page. Furthermore, the content information is to be published to the second electronic apparatus 120, which is "Apparatus 01".

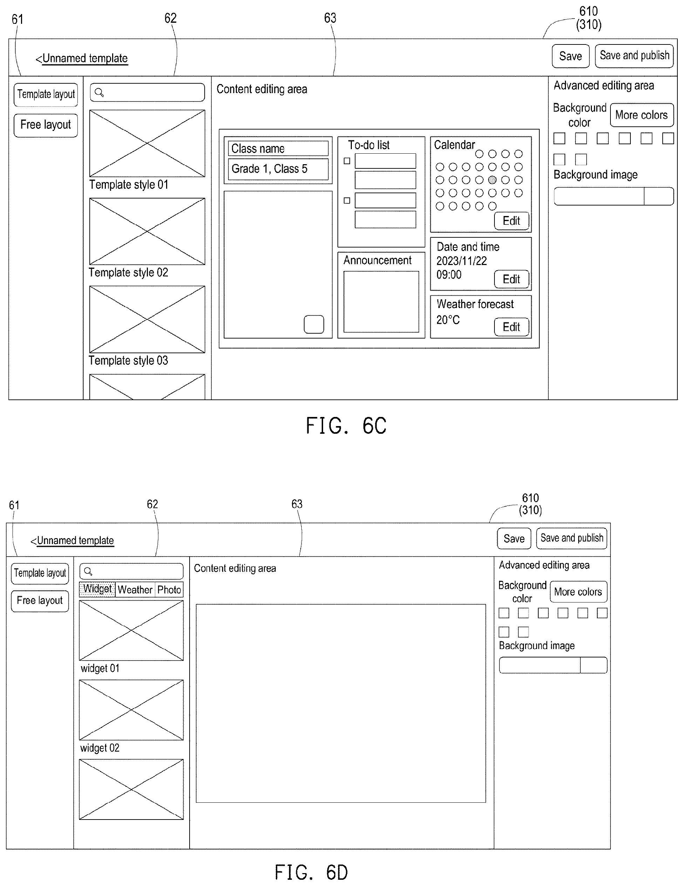

As shown in FIG. 6A, the "Files" option 611 is selected, and a file editing page 613 displays multiple created files, such as "Class information for Grade 1, Class 2", "Lunch break", and "Final exam". The user may select option 615 in the file editing page 613 to add a template. As shown in FIG. 6B, a template selection window 620 overlaps on top of the file editing page 613 to provide multiple preset templates for the user to select from in the template selection window 620. After the user selects one of the preset templates and presses the create button, the editing interface 610 is displayed as shown in FIG. 6C.

Referring to FIG. 6C, a field 61 provides two layout methods, that is, template layout and free layout. FIG. 6C shows an example in which the template layout is selected. The template layout is a preset layout method (for example, the content of the widgets is fixed), which allows only minor style adjustments. There are different types of layouts for the teacher to select from, such as frequently used styles (for example, background color scheme, background content, etc.). In addition, the cloud server 130 may provide recommended layouts for the teacher. The template layout does not allow adjustments of the types of components and the arrangement, but only changes to the page style. In a field 62, different types of template styles may be available according to requirements (for example, school requirements), with each style carrying different parameters. In the template layout, the most suitable template may be further recommended through an artificial intelligence module with algorithms based on the user's selection and habits. A field 63 provides a content editing area and an advanced editing area for the user to edit content information.

FIG. 6D shows the free layout. The free layout allows the user to freely select the types of components to be added and the arrangement. The field 62 in the free layout provides various components, and the user may freely add components from the field 62 to the "content editing area" in the field 63 (for example, by dragging). In the free layout, the user may set up widgets as desired, which is more flexible in use.

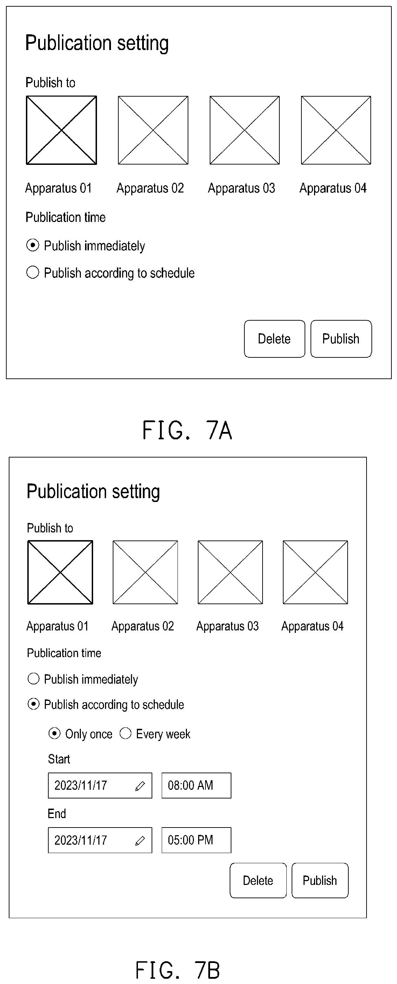

When the layout and the content information have been decided, the user may publish the layout and the content information, and the user may specify the second electronic apparatus(es) for publication and the publication time. For example, by selecting the "Save and publish" option, a publication setting window is displayed on top of the content editing area 63. For instance, FIG. 7A to FIG. 7C are schematic diagrams of the publication setting window according to an embodiment of the disclosure. In FIG. 7A, the first interactive interface 310 displays the publication setting window, in which the user may designate an electronic apparatus for publication as "Apparatus 01" (corresponding to the second electronic apparatus 120), and specify the publication time as "Publish immediately". After publication, the published content information can be seen in the second interactive interface 320 of the second electronic apparatus 120 corresponding to "Apparatus 01".

In FIG. 7B, the second electronic apparatus designated for publication is "Apparatus 01" (assumed to correspond to the second electronic apparatus 120), and the specified publication time is "Publish according to schedule", with the option to publish only once, from AM 6:00 on 2023/11/17 to PM 5:00 on 2023/11/17.

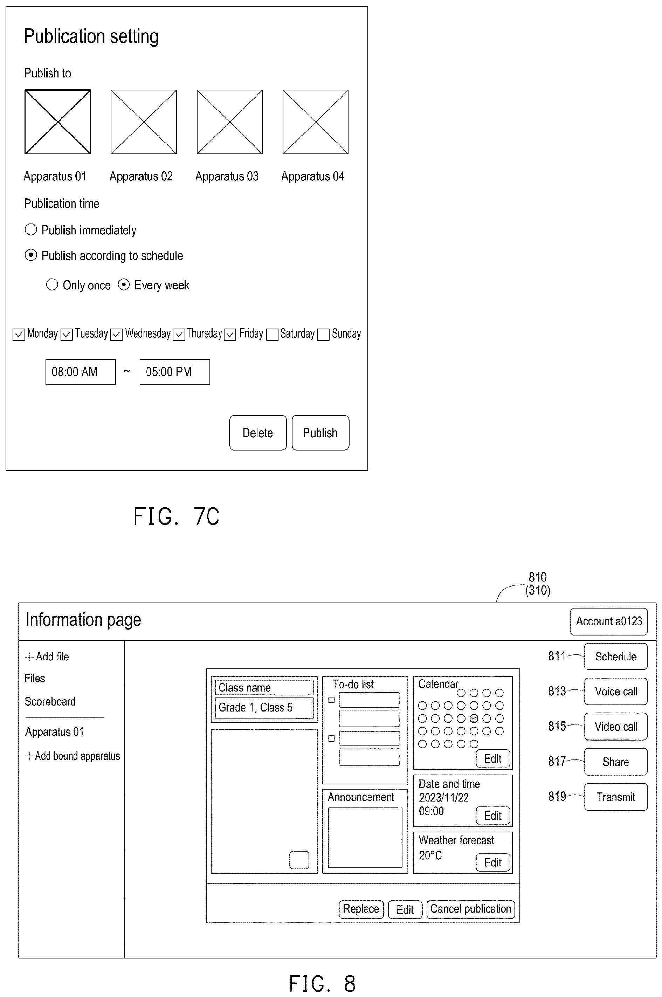

In FIG. 7C, the second electronic apparatus designated for publication is "Apparatus 01" (assumed to correspond to the second electronic apparatus 120), and the specified publication time is "Publish according to schedule", with the option to publish every Monday to Friday, from AM 6:00 to PM 5:00.

In addition to publishing content information, the first electronic apparatus 110 may enable interaction between the user of the first electronic apparatus 110 and the user of the second electronic apparatus 120 through voice or video.

In an embodiment, in response to the user operating the first electronic apparatus 110 to log in to the first interactive interface 310 through the management account data, a multimedia signal (for example, voice signal and video signal, etc.) is captured through a multimedia capturing device of the first electronic apparatus 110 (a voice receiving device such as a microphone, and an image capturing device such as a camera), and the multimedia signal is transmitted to the cloud server 130 through the first interactive interface 310. The cloud server 130 transmits the multimedia signal to the second electronic apparatus 120. In the second electronic apparatus 120, the multimedia signal transmitted from the first interactive interface 310 is played in real-time through the second interactive interface 320.

Moreover, in response to the management account data logging in to the first interactive interface 310 of the first electronic apparatus 110, the multimedia signal captured by a multimedia capturing device of the second electronic apparatus 120 (similar to the multimedia capturing device of the first electronic apparatus 110) is played in real-time through the first interactive interface 310.

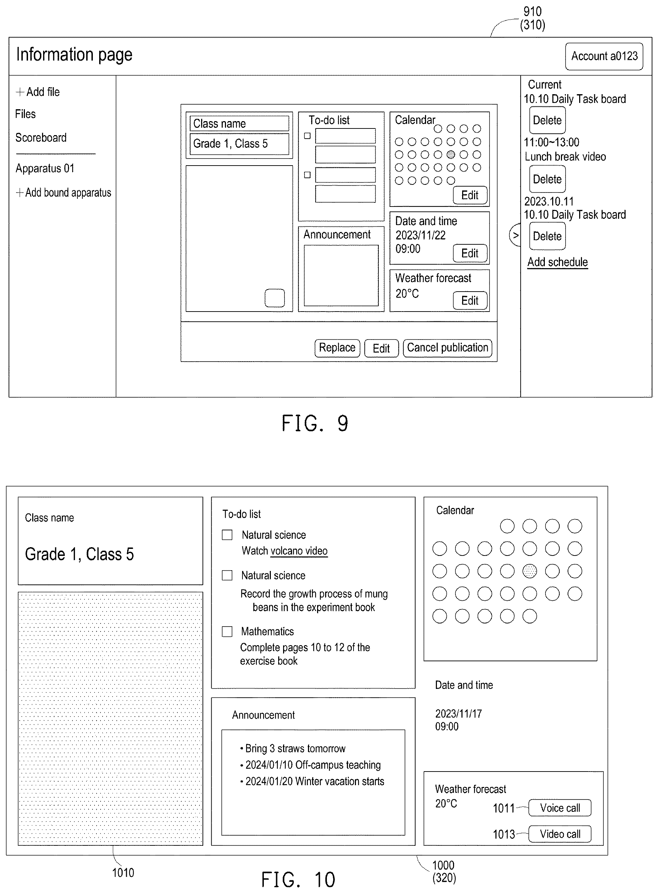

FIG. 8 is a schematic diagram of the first electronic apparatus displaying the user interface according to an embodiment of the disclosure. FIG. 9 is a schematic diagram of the first electronic apparatus displaying the schedule resetting interface according to an embodiment of the disclosure. As shown in FIG. 8, after the first electronic apparatus 110 is communicatively connected to the cloud server 130 and inputs management account data (the management account may be, for example, "a0123") to log in to the first interactive interface 310, the first interactive interface 310 displays a user interface 810. As shown in FIG. 9, after the first electronic apparatus 110 inputs the management account data "a0123" to log in to the first interactive interface 310, the first interactive interface 310 displays a schedule resetting interface 910.

The user interface 810 includes five options: "Schedule", "Voice call", "Video call", "Share", and "Transmit", represented by 811, 813, 815, 817, and 819 respectively. When the "Schedule" option 811 is enabled, the display screen of the first electronic apparatus 110 may switch from the user interface 810 to the schedule resetting interface 910 for the user to re-edit and set the publication time.

When the "Voice call" option 813 is enabled, the processor of the first electronic apparatus 110 may enable the voice receiving device (for example, microphone) to receive voice, and transmit the captured voice signal to the second electronic apparatus 120 through the cloud server 130 for playing the voice signal in real-time through a voice playback device (for example, speaker, loudspeaker, etc.) of the second electronic apparatus 120.

When the "Video call" option 815 is enabled, the processor of the first electronic apparatus 110 may enable the voice receiving device (for example, microphone) and the image capturing device (for example, camera) to record a video, and transmit the captured video signal to the second electronic apparatus 120 through the cloud server 130 for playing the video signal in real-time through the voice playback device (for example, speaker, loudspeaker, etc.) in conjunction with the display of the second electronic apparatus 120.

When the "Share" option 817 is enabled, the user may further select a multimedia file (for example, image, video, etc.) to be shared with the second electronic apparatus 120.

When the "Transmit" option 819 is enabled, the content information completed by the user may be transmitted to a third electronic apparatus such as the electronic apparatus used by a parent. This will be described in detail later.

In an embodiment, it is assumed that the template tempB published by teacher A with management account data acc_TA is currently displayed on the second electronic apparatus 120. When teacher B with another management account data acc_TB enters the editing interface 610 through the first electronic apparatus 110 used by teacher B, and clicks on the "Apparatus 01" option (corresponding to the second electronic apparatus 120), the page of template tempB published by teacher A with management account data acc_TA is displayed. If teacher B with management account data acc_TB wants to modify template tempB, teacher B may further click on the "Copy and edit" button (not shown) on the aforementioned page to copy template tempB to the file editing page 613 of the editing interface 610 corresponding to management account data acc_TB, thereby enabling teacher B with management account data acc_TB to further edit template tempB. In an embodiment, when teacher B with another management account data acc_TB enters the editing interface 610 through the first electronic apparatus 110 used by teacher B, and clicks on the "Apparatus 01" option (corresponding to the second electronic apparatus 120), the page of template tempB published by teacher A with management account data acc_TA is displayed. At this time, teacher B may directly edit template tempB on the aforementioned page and then publish again.

FIG. 10 is a schematic diagram of the second electronic apparatus displaying the user interface according to an embodiment of the disclosure. FIG. 10 shows a user interface 1000 provided by the second interactive interface 320. After the second electronic apparatus 120 is communicatively connected to the cloud server 130, the user interface 1000 provided by the second interactive interface 320 is displayed on the second electronic apparatus 120. The user interface 1000 includes two options, "Voice call" and "Video call", represented by 1011 and 1013 respectively.

When the "Voice call" option 1011 is enabled, the processor of the second electronic apparatus 120 may enable the voice receiving device (for example, microphone) to receive voice, and transmit the captured voice signal to the first electronic apparatus 110 through the cloud server 130 for playing the voice signal in real-time through the voice playback device (for example, speaker, loudspeaker, etc.) of the first electronic apparatus 110.

When the "Video call" option 1013 is enabled, the processor of the second electronic apparatus 120 may enable the voice receiving device and the image capturing device to record a video, and transmit the captured video signal to the first electronic apparatus 110 through the cloud server 130 for playing the video signal in real-time through the voice playback device (for example, speaker, loudspeaker, etc.) in conjunction with the display of the first electronic apparatus 110.

A sharing area 1010 of the user interface 1000 is configured to display a multimedia file (for example, image, video, etc.) selected through the content editing area 63. Specifically, the user activates the "Share" option 817 in the user interface 810 to share the multimedia file (for example, image, video, etc.) in the content editing area 63 to the user interface 1000.

In another embodiment, even though the content information is not displayed on the display of the second electronic apparatus 120, the first electronic apparatus 110 may continuously receive the voice signal or video signal from the second electronic apparatus 120 as long as the information application (or web browser) is not closed.

In an educational field, the teacher and students may interact through voice and/or video during break times. Specifically, when the teacher selects the "Voice call" option 813 or the "Video call" option 815 as shown in FIG. 8, the students in the classroom with the designated second electronic apparatus 120 may immediately receive the voice signal or video signal (that is, broadcast function). The students may also select the "Voice call" option 1011 or the "Video call" option 1013 as shown in FIG. 10 on the second electronic apparatus 120 (that is, the designated apparatus) in the classroom for the teacher to receive the voice signal or video signal in real-time.

Furthermore, when the teacher arrives at the classroom for lecture, the teacher may see the published content information displayed in the second interactive interface 320 of the second electronic apparatus 120, and the teacher may click on the hyperlink in the content information or confirm whether a task has been completed. If the content information in the second interactive interface 320 of the second electronic apparatus 120 is modified (for example, a task is checked off, which indicates completion of the task), the content information corresponding to the content information in the first interactive interface 310 of the first electronic apparatus 110 used by the teacher is also adjusted accordingly. In an embodiment, only users with management account data may be able to modify the content information displayed in the second interactive interface 320 of the second electronic apparatus 120.

In addition to publishing content information to the second electronic apparatus 120, the first electronic apparatus 110 may also publish content information to a third-party electronic apparatus used with third-party account data. For example, the teacher may select a scoreboard in the editing interface 610 provided by the first interactive interface 310 displayed on the first electronic apparatus 110, and assign scores for multiple students on a scoring editing panel of the scoreboard.

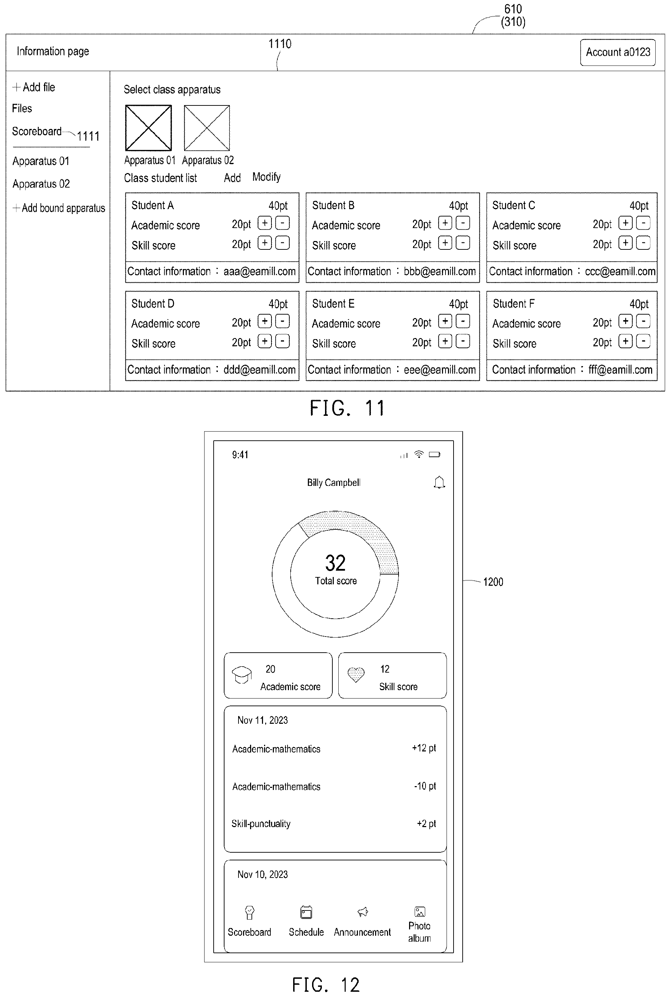

For example, FIG. 11 is a schematic diagram of a scoring editing panel according to an embodiment of the disclosure. When the "Scoreboard" option 1111 in the editing interface 610 is triggered, the editing interface 610 displays a scoring editing panel 1110. Here, the cloud server 130 has created and stored student list information for various classes, and associated the student list information with the display apparatus (second electronic apparatus 120) set up in the classrooms. When "Apparatus 01" in the scoring editing panel 1110 is selected through the first electronic apparatus 110, the cloud server 130 reads the student list information corresponding to "Apparatus 01", and displays score blocks for multiple corresponding students in the scoring editing panel 1110 on the first electronic apparatus 110. The score blocks include student names, scores, contact information (for example, email addresses), etc. The user (teacher) may add or deduct points in the score blocks.

The cloud server 130 further generates an external display interface, and provides the external display interface for display on a third-party electronic apparatus. For example, the user may use third-party account data to log in to the external display interface provided by the cloud server 130 through the third-party electronic apparatus. The third-party electronic apparatus is communicatively connected to the cloud server 130 through the external display interface. Thereby, the user may see designated content in the external display interface. Specifically, in response to the management account data logging in to the first interactive interface 310 of the first electronic apparatus 110, and selecting the third-party account data and designated content through the first interactive interface 310, the cloud server 130 transmits the designated content to the external display interface corresponding to the third-party account data.

For example, the third-party account data may be account data of the student's parents. Parents may register in advance their email addresses with the cloud server 130 and install a parent version of the information application on their electronic apparatuses (third-party electronic apparatuses) such as smartphones. After logging in to the information application through their smartphones, parents may receive the designated content, which includes content information such as the student's scores, class content information, etc. Alternatively, parents may also use a web browser to connect to the external display interface provided by the cloud server 130, and input the registered third-party account data to see information such as the student's scores, class content, etc.

FIG. 12 is a schematic diagram of the third-party electronic apparatus displaying the designated content according to an embodiment of the disclosure. Referring to FIG. 12, a smartphone 1200 displays a screen of the parent version of the information application. The information application logged in by the parents may show the score "32" given to the student by the teacher. In this case, the information application further categorizes information into scoreboard, schedule, announcement, and photo album.

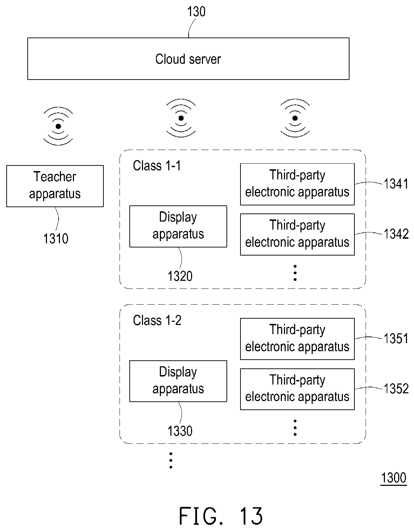

FIG. 13 is a schematic diagram of the remote interaction system according to the third embodiment of the disclosure. The third embodiment illustrates application of the second embodiment to an educational field. A remote interaction system 1300 includes a cloud server 130, a teacher apparatus (first electronic apparatus) 1310, a display apparatus (second electronic apparatus) 1320 set up in the classroom of class 1-1, a display apparatus (second electronic apparatus) 1330 set up in the classroom of class 1-2, third-party electronic apparatuses 1341 and 1342 used by parents corresponding to class 1-1, and third-party electronic apparatuses 1351 and 1352 used by parents corresponding to class 1-2. The numbers of teacher apparatuses, display apparatuses, and third-party electronic apparatuses illustrated here are only exemplary, and the disclosure is not limited thereto. The functions executed by the teacher apparatus 1310 may be understood from the description of the first electronic apparatus 110. The functions executed by the display apparatuses 1320 and 1330 may be understood from the description of the second electronic apparatus 120. The details of the third-party electronic apparatuses 1341, 1342, 1351, and 1352 may be understood from the description of the smartphone 1200.

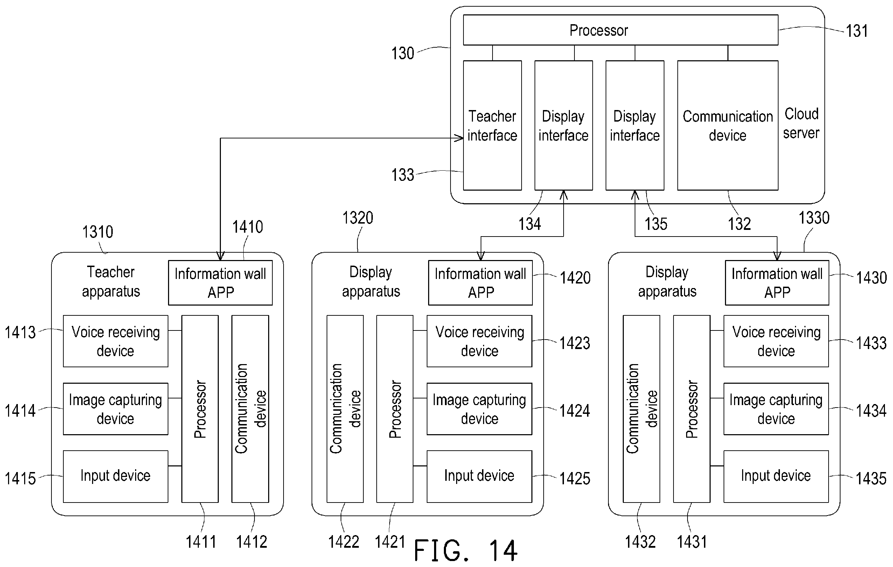

FIG. 14 is an architecture diagram of the remote interaction system according to the third embodiment of the disclosure. The cloud server 130 includes a processor 131 and a communication device 132, and provides a teacher interface (first interactive interface) 133, a display interface (second interactive interface) 134, and a display interface (second interactive interface) 135. The teacher interface 133 may be understood from the description of the first interactive interface 310. The display interfaces 134 and 135 may be understood from the description of the second interactive interface 320. The cloud server 130 includes a hardware structure with the processor 131, the communication device 132, and a storage, which is similar to the hardware structures of the teacher apparatus (first electronic apparatus) and the display apparatus (second electronic apparatus).

The teacher apparatus 1310 has an information application 1410 installed therein, and includes a processor 1411, a communication device 1412, a voice receiving device 1413, an image capturing device 1414, and an input device 1415. The display apparatus 1320 has an information application 1420 installed therein, and includes a processor 1421, a communication device 1422, a voice receiving device 1423, an image capturing device 1424, and an input device 1425. The display apparatus 1330 has an information application 1430 installed therein, and includes a processor 1431, a communication device 1432, a voice receiving device 1433, an image capturing device 1434, and an input device 1435.

The voice receiving devices 1413, 1423, and 1433 may be, for example, microphones. The image capturing devices 1414, 1424, and 1434 may be, for example, cameras. The input devices 1415, 1425, and 1435 may be, for example, mice, keyboards, or touch sensors. The teacher activates the information application 1410 on the teacher apparatus 1310, inputs management account data to log in to the classroom interface 133, and completes the binding with the display apparatuses 1320 and 1330. Then, the teacher's operations on the teacher apparatus 1310 can be correspondingly transmitted to the bound display apparatuses 1320 and 1330.

After the display apparatus 1320 activates the information application 1420, the display apparatus 1320 receives and processes the information transmitted from the cloud server 130 through the information application 1420, or transmits the user operations on the display apparatus 1320 to the cloud server 130, which then transmits the information to the teacher apparatus 1310. The operations of the display apparatus 1330 are similar.

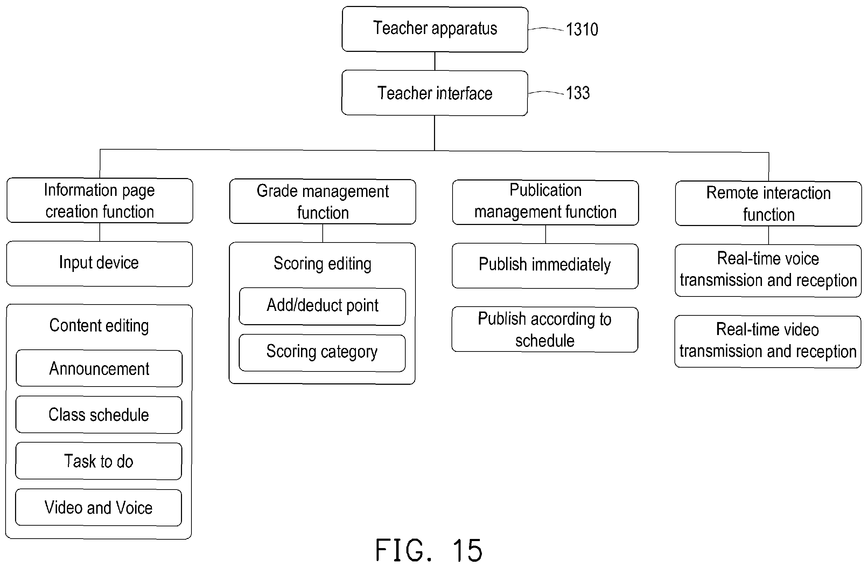

FIG. 15 is a schematic diagram of the functions provided by the teacher interface according to the third embodiment of the disclosure. Referring to FIG. 15, the teacher interface 133 provides an information creation function, a grade management function, a publication management function, and a remote interaction function.

In the teacher apparatus 1310, the steps of setting the content information of the information page according to a user operation through the teacher interface 133 include at least one of steps 1-1 to 1-4. Step 1-1: Execute the information page creation function to select a preset template from the template library (the template library, for example, is a database storing many different templates) or add a blank template, and set the content information of the information page in the preset template or blank template, wherein the content information of the information page includes at least one of announcement, class schedule, task to do, and video and voice. Step 1-2: Execute the grade management function to perform a grade editing. For example, scores are assigned through the scoring editing panel 1110 shown in FIG. 11. Step 1-3: Execute the publication management function to set to publish the content information of the information page in real-time, or set the publication time (publish according to schedule) of the content information of the information page. Step 1-4: Execute the remote interaction function to trigger the multimedia capturing device (multimedia capturing device including a voice receiving device 1413 and an image capturing device 1414) of the teacher apparatus 1310 to capture the multimedia signal, and allow reception of the multimedia signal transmitted from the display interface 134 or the display interface 135.

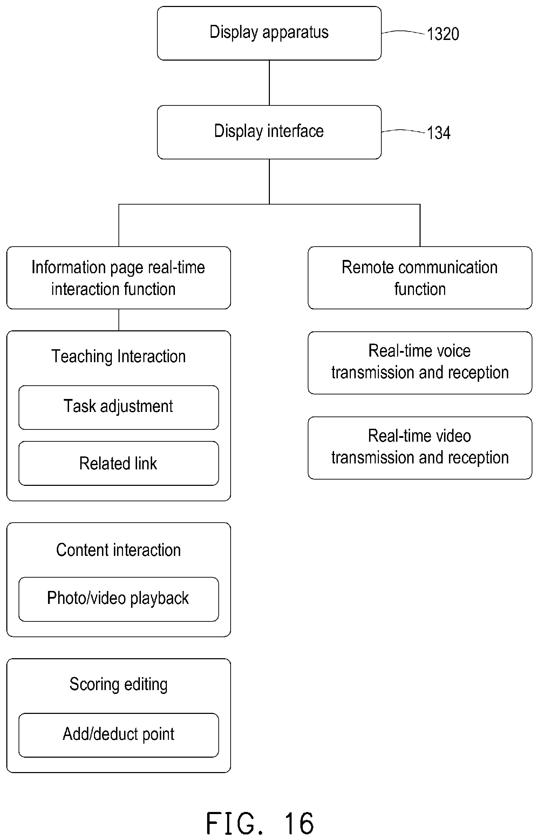

FIG. 16 is a schematic diagram of the functions provided by the display interface according to the third embodiment of the disclosure. Referring to FIG. 16, the display interface 134 provides an information page real-time interaction function and a remote interaction function. After displaying the content information of the information page through the display interface 134, the steps further include at least one of steps 2-1 and 2-2. Step 2-1: Execute the information page real-time interaction function through the display apparatus 1320 to control or adjust the content information of the information page in the display interface 134. Step 2-2: Execute the remote interaction function through the display apparatus 1320 to trigger the multimedia capturing device (multimedia capturing device including a voice receiving device 1423 and an image capturing device 1424) of the display apparatus 1320 to capture the multimedia signal, and allow reception of the multimedia signal transmitted from the teacher interface 133.

Additionally, the functions provided by the display interface 135 are the same as the functions provided by the display interface 134, and therefore will not be repeated here.

In an embodiment, when the teacher arrives at the classroom of class 1-1 for lecture, the teacher may see the content information previously published on the display apparatus 1320 in the classroom, and depending on the user permissions, allow authorized persons (for example, teacher or class monitor) to click on the display interface 134 shown on the display apparatus 1320, such as clicking on a hyperlink, a button, or a task. Here, the authorized persons (for example, teacher or class monitor) may modify the content in a specific area of the content information (for example, checking off a task, which indicates completion of the task), causing the corresponding content in a specific area of the content information stored in the cloud server 130 to be modified accordingly. This ensures that the modified content information displayed on the display apparatus 1320 is consistent with the modified content information stored in the cloud server 130 and the modified content information displayed in the teacher interface 133 of the teacher apparatus 1310.

In summary, the above embodiments of the disclosure have at least one of the following advantages: providing an information page with remote interaction capability which makes it possible to remotely set content information in the information page and publish the content information to designated electronic apparatuses, offering real-time remote interaction between the teacher and students outside of class hours, and providing the parents a platform to understand the students' situations.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A remote interaction method, comprising:
displaying (S205) a first interactive interface (310) through a first electronic apparatus (110);
inputting (S210) management account data through the first electronic apparatus (110) to log in to the first interactive interface (310);
setting (S215) content information according to a user operation through the first interactive interface;
transmitting (S220) the content information through the first electronic apparatus (110);
receiving (S225) the content information through a second electronic apparatus (120);
displaying (S230) a second interactive interface (320) through the second electronic apparatus (120); and
displaying (S235) the content information through the second interactive interface (320).

2. The remote interaction method according to claim 1, further comprising:
communicatively connecting a cloud server (130) with the first electronic apparatus (110) through the first interactive interface (310), and communicatively connecting the cloud server (130) with the second electronic apparatus (120) through the second interactive interface (320);
transmitting the content information to the cloud server (130) through the first interactive interface (310) of the first electronic apparatus (110) and storing the content information in the cloud server (130) in response to the management account data logging in to the first interactive interface (310) of the first electronic apparatus (110); and
receiving the content information stored in the cloud server (130) through the second interactive interface (320) after displaying the second interactive interface (320) through the second electronic apparatus (120).

3. The remote interaction method according to claim 2, further comprising:
executing a binding operation through the cloud server (130) to bind the second electronic apparatus (120) to the management account data, wherein the binding operation comprises:
generating an identification code by the cloud server (130), and transmitting the identification code to the second electronic apparatus (120) to display the identification code on the second interactive interface (320) in response to the cloud server (130) receiving a binding command provided by the second electronic apparatus (120);
transmitting an input code to the cloud server (130) through the first interactive interface (310) of the first electronic apparatus (110) in response to the management account data logging in to the first interactive interface (310) in the first electronic apparatus (110); and
adding apparatus information corresponding to the second electronic apparatus (120) in the first interactive interface (310), and enabling the first electronic apparatus (110) and the second electronic apparatus (120) to interact through the first interactive interface (310) and the second interactive interface (320) in response to the cloud server (130) determining that the input code is the identification code.

4. The remote interaction method according to claim 3, wherein after binding the second electronic apparatus (130) to the management account data, the remote interaction method further comprises:
selecting another management account data through the first interactive interface (310) of the first electronic apparatus (110) in response to the management account data logging in to the first interactive interface (310) of the first electronic apparatus (110); and
adding the apparatus information corresponding to the second electronic apparatus (120) to a third interactive interface corresponding to the another management account data through the cloud server (130), thereby binding the second electronic apparatus (120) to the another management account data.

5. The remote interaction method according to any one of the claims 2, 3 or 4, further comprising:
setting the content information and a publication time according to the user operation through the first interactive interface (310), and transmitting the content information and the publication time to the cloud server (130) in response to the management account data logging in to the first interactive interface (310) of the first electronic apparatus (110); and
transmitting the content information to the second electronic apparatus (120) through the cloud server (130), and transmitting a display command to the second electronic apparatus (120) at the publication time to enable the second electronic apparatus (120) to display the content information through the second interactive interface (320).

6. The remote interaction method according to any one of the claims 2-5,, further comprising:
in response to the cloud server (130) receiving a plurality of pieces of content information, transmitting a display command to the second electronic apparatus (120) at a publication time of each piece of the content information through the cloud server (130), and enabling the second electronic apparatus (120) to display one corresponding piece of the content information through the second interactive interface (320).

7. The remote interaction method according to any one of the claims 2-6,, wherein the cloud server (130) is configured to provide an external display interface for use by third-party account data, and the remote interaction method further comprises:
selecting the third-party account data and designated content through the first interactive interface (310), and transmitting the designated content to the external display interface corresponding to the third-party account data in response to the management account data logging in to the first interactive interface of the first electronic apparatus (110).

8. The remote interaction method according to any one of the preceding claims, further comprising:
capturing a multimedia signal through a multimedia capturing device of the first electronic apparatus (110), and transmitting the multimedia signal through the first interactive interface (310) in response to the management account data logging in to the first interactive interface (310) of the first electronic apparatus (110); and
playing the multimedia signal transmitted from the first interactive interface (310) through the second interactive interface (320) of the second electronic apparatus (120).

9. The remote interaction method according to any one of the preceding claims, further comprising:
playing a multimedia signal captured by a multimedia capturing device of the second electronic apparatus (120) through the first interactive interface (310) in response to the management account data logging in to the first interactive interface (310) of the first electronic apparatus (110).

10. The remote interaction method according to any one of the preceding claims, further comprising:
displaying the content information through the second interactive interface (320), and in response to the second interactive interface (320) receiving another content information, overlaying the another content information on the content information in the second interactive interface (320).

11. The remote interaction method according to any one of the preceding claims, wherein the second interactive interface (320) is configured to provide an information page real-time interaction function and a remote interaction function,
after displaying content information of an information page through the second interactive interface (320), the remote interaction method further comprises at least one of:
executing the information page real-time interaction function through the second electronic apparatus (120) to control or adjust the content information of the information page in the second interactive interface (320); and
executing the remote interaction function through the second electronic apparatus (120) to trigger a multimedia capturing device of the second electronic apparatus (120) to capture a second multimedia signal, and allowing reception of a first multimedia signal transmitted from the first interactive interface (310) of the first electronic apparatus (110).

12. The remote interaction method according to any one of the preceding claims, wherein the first interactive interface (310) is configured to provide an information page creation function, a grade management function, a publication management function, and a remote interaction function,
wherein a step of setting the content information according to the user operation through the first interactive interface (310) of the first electronic apparatus (110) comprises at least one of:
executing the information page creation function to select a preset template from a template library or add a blank template, and setting the content information in the preset template or the blank template, wherein the content information comprises at least one of an announcement, a class schedule, a task to do, and video and voice;
executing the grade management function to perform a grade editing;
executing the publication management function to set to immediately publish the content information, or set a publication time of the content information; and
executing the remote interaction function to trigger a multimedia capturing device of the first electronic apparatus (110) to capture a first multimedia signal, and allowing reception of a second multimedia signal transmitted from the second interactive interface (320).

13. A remote interaction system, comprising:
a first electronic apparatus (110) comprising at least one processor, a display, an input device, and a communication device, wherein the at least one processor is electrically connected to the display and the communication device respectively, wherein
the display is configured to display a first interactive interface (310);
the input device is configured to input management account data to log in to the first interactive interface (310);
the at least one processor is configured to set content information according to a user operation through the first interactive interface (310); and
the communication device is configured to transmit the content information; and
a second electronic apparatus (120) comprising at least one processor, a display, and a communication device, wherein the at least one processor is electrically connected to the display and the communication device respectively, wherein
the communication device is configured to receive the content information;
the display is configured to display a second interactive interface (320); and
the at least one processor is configured to provide the content information to the display to display the content information through the second interactive interface (320).
